(19) Europäisches Patentamt / European Patent Office / Office européen des brevets

(11) **EP 3 998 149 B1**

(12) **EUROPEAN PATENT SPECIFICATION**

(45) Date of publication and mention
of the grant of the patent:
**03.01.2024 Bulletin 2024/01**

(21) Application number: **20837496.7**

(22) Date of filing: **07.07.2020**

(51) International Patent Classification (IPC):
**B29C 45/00** (2006.01)   **C08F 8/32** (2006.01)
**C08F 212/08** (2006.01)   **C08L 35/06** (2006.01)
**C08L 55/02** (2006.01)   **C08L 25/12** (2006.01)
**C08F 222/40** (2006.01)   **C08F 222/06** (2006.01)
**C08F 220/44** (2006.01)

(52) Cooperative Patent Classification (CPC):
(C-Sets available)
**C08F 212/08; B29C 45/0001; C08L 35/06;**
**C08L 55/02;** B29K 2025/04; B29L 2031/3055;
C08F 2810/50   (Cont.)

(86) International application number:
**PCT/JP2020/026540**

(87) International publication number:
**WO 2021/006266 (14.01.2021 Gazette 2021/02)**

(54) **MALEIMIDE COPOLYMER, MANUFACTURING METHOD THEREFOR, AND RESIN COMPOSITION USING SAME**

MALEIMID-COPOLYMER, VERFAHREN ZU SEINER HERSTELLUNG UND HARZZUSAMMENSETZUNG DAMIT

COPOLYMÈRE DE MALÉIMIDE, SON PROCÉDÉ DE FABRICATION ET COMPOSITION DE RÉSINE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2019 JP 2019128313**

(43) Date of publication of application:
**18.05.2022 Bulletin 2022/20**

(73) Proprietor: **Denka Company Limited**
**Tokyo 103-8338 (JP)**

(72) Inventors:
• **MATSUBARA, Tatsuhiro**
**Tokyo 103-8338 (JP)**
• **MATSUMOTO, Masanori**
**Tokyo 103-8338 (JP)**
• **NISHINO, Kohei**
**Tokyo 103-8338 (JP)**

(74) Representative: **Gulde & Partner**
**Patent- und Rechtsanwaltskanzlei mbB**
**Wallstraße 58/59**
**10179 Berlin (DE)**

(56) References cited:
**JP-A- H0 657 063**      **JP-A- H1 160 640**
**JP-A- H1 160 640**      **JP-A- H03 137 112**
**JP-A- H06 248 017**      **JP-A- H07 316 371**
**JP-A- 2001 329 026**      **JP-A- 2001 329 026**
**JP-A- 2010 505 022**      **KR-A- 20050 054 382**
**US-A1- 2006 241 277**

Remarks:
The file contains technical information submitted after the application was filed and not included in this specification

EP 3 998 149 B1

(52) Cooperative Patent Classification (CPC): (Cont.)

C-Sets
**C08F 212/08, C08F 220/44, C08F 222/06,
C08F 212/12;
C08F 212/08, C08F 222/40, C08F 220/44,
C08F 222/06;
C08L 55/02, C08L 25/12;
C08L 55/02, C08L 35/06**

## Description

### TECHNICAL FIELD

The present invention relates to a maleimide based copolymer, manufacturing method thereof, and to a resin composition using the maleimide based copolymer.

### BACKGROUND

Due to its superior mechanical strength, appearance, chemical resistance, moldability and the like, acrylonitrile-butadiene-styrene copolymer resin (ABS resin) is used in a wide variety of applications including automobiles, home appliances, office automation equipment, housing materials, daily necessities and the like. In applications which require heat resistance such as interior material of automobiles, ABS resin (heat resistant ABS) containing maleimide based copolymer as the heat resistance providing agent is used (for example, Patent Literature 1, Patent Literature 2). Patent Literature 5 discloses a thermoplastic resin composition based on a maleimide based copolymer with low discoloration and excellent processability, heat resistance and impact resistance. Patent Literature 6 relates to a resin composition containing maleimide based copolymers, an acrylonitrile-butadiene-styrene copolymer resin and a styrene-acrylonitrile copolymer resin. Patent Literature 7 is directed to a maleimide copolymer for producing a heat-resistant ABS resin, which can be homogeneously kneaded with a ABS resin. Patent Literature 8 relates to wheel cover, having good balance of rigidity, impact strength, heat resistance which is produced by injection molding a thermoplastic resin composition obtained by blending specific amounts of a specific vinyl-based copolymer, a polyamide and a modified polyolefin. Patent Literature 9 is directed to a polymer which is excellent in mechanical strength and heat resistance and which is obtained by bulk-polymerizing and suspension-polymerizing of a specific vinyl aromatic compound, maleimide, an N-substituted maleimide and a vinyl cyanide compound. Patent Literature 10 discloses maleimide based copolymers in combination with an acrylonitrile-butadiene-styrene copolymer resin which are used as interior/exterior goods for automobiles.

For the purpose of further providing chemical resistance to heat resistant ABS, a heat resistance providing agent which is obtained by copolymerizing vinyl cyanide monomer to maleimide based copolymer is proposed (for example, Patent Literature 3, Patent Literature 4). These heat resistance providing agent have no problem in usual usage. However, when a mixed resin of heat resistance providing agent and ABS is subjected to injection molding, the surface glossiness of the injection molded body can degrade, depending on the injection molding conditions.

### CITATION LIST

### PATENT LITERATURE

[Patent Literature 1] JP S57-98536 A
[Patent Literature 2] JP S57-125242 A
[Patent Literature 3] JP 2004-339280 A
[Patent Literature 4] JP 2007-9228 A
[Patent Literature 5] JP H11 60640 A
[Patent Literature 6] KR 2005 0054382 A
[Patent Literature 7] JP 2001 329026 A
[Patent Literature 8] JP H06 57063 A
[Patent Literature 9] JP H06 248017 A
[Patent Literature 10] US 2006/241277 A1

### SUMMARY OF INVENTION

### TECHNICAL PROBLEM

The present invention provides a maleimide based copolymer which allows to obtain a molded body which can retain impact resistance, heat resistance, and flowability and can achieve high surface glossiness, and a manufacturing method thereof. In addition, a resin composition obtained by mixing and kneading maleimide based copolymer with one or two or more of a resin selected from the group consisting of ABS resin, acrylonitrile-styrene-acryl based rubber copolymer resin (ASA resin), acrylonitrile-ethylene · propylene based rubber-styrene copolymer resin (AES resin), and styrene-acrylonitrile copolymer resin (SAN resin), the resin composition capable of allowing to obtain a molded body which can retain impact resistance, heat resistance, and flowability and can achieve high surface glossiness, is provided.

## SOLUTION TO PROBLEM

That is, the gist of the present invention are as follows.

(1) A maleimide based copolymer comprising 40 to 55 mass% of aromatic vinyl monomer unit, 7 to 20 mass% of vinyl cyanide monomer unit, 25 to 50 mass% of maleimide monomer unit, 0.1 to 10 mass% of dicarboxylic anhydride monomer unit; wherein the maleimide based copolymer has a glass transition temperature of 165 to 200°C measured in accordance with JIS K-7121 at a temperature elevation rate of 10 °C/min; an average number of the dicarboxylic anhydride monomer unit contained in one copolymer molecule is 1 to 20 units measured with colorimetric titration according to the description, and the weight average molecular weight of the maleimide based copolymer is 50,000 to 150,000.
(2) A manufacturing method of the maleimide based copolymer of (1), comprising the steps of:

initial polymerizing step to start copolymerization by blending entire amount of vinyl cyanide monomer to be charged, 10 to 90 mass% of aromatic vinyl monomer to be charged, and 0 to 30 mass% of unsaturated dicarboxylic anhydride monomer to be charged;
middle polymerization step to continue copolymerization while adding 50 to 90 mass% of residual amount of the aromatic vinyl monomer and entirety of residual amount of the unsaturated dicarboxylic anhydride monomer, each added by portions or continuously;
final polymerization step to add entirety of residual amount of aromatic vinyl monomer to obtain a copolymer including the aromatic vinyl monomer unit, the vinyl cyanide monomer unit, and the dicarboxylic anhydride monomer unit; and
imidizing step to imidize the dicarboxylic anhydride monomer unit of the copolymer obtained into the maleimide monomer unit by using ammonia or primary amine.

(3) A resin composition comprising 5 to 40 mass% of the maleimide based copolymer of (1) and 60 to 95 mass% of one or two or more of a resin selected from the group consisting of acrylonitrile-butadiene-styrene copolymer resin, acrylonitrile-styrene-acryl based rubber copolymer resin, acrylonitrile-ethylene-propylene based rubber-styrene copolymer resin, and styrene-acrylonitrile copolymer resin.
(4) An injection molded body using the resin composition of (3) .
(5) Use of the injection molded body of (4) as an interior component or exterior component of an automobile.

## EFFECT OF THE INVENTION

By the present invention, a maleimide based copolymer which allows to obtain a molded body which can retain impact resistance, heat resistance, and flowability and can achieve high surface glossiness, and a manufacturing method thereof is provided. Further, a resin composition obtained by mixing and kneading maleimide based copolymer with one or two or more of a resin selected from the group consisting of ABS resin, ASA resin, AES resin, and SAN resin, the resin composition capable of allowing to obtain a molded body which can retain impact resistance, heat resistance, and flowability and can achieve high surface glossiness, is provided.

## EMBODIMENTS OF THE INVENTION

<Explanation of Terms>

In the present specification, the phrase "A to B" means A or more and B or less.
The maleimide based copolymer of the present invention includes not only the maleimide based copolymer obtained by copolymerizing aromatic vinyl monomer, vinyl cyanide monomer, maleimide monomer, and unsaturated dicarboxylic anhydride monomer, but also the maleimide based copolymer obtained by first copoymerizing aromatic vinyl monomer, vinyl cyanide monomer, and unsaturated dicarboxylic anhydride monomer, and then imidizing the dicarboxylic anhydride monomer unit in the molecule derived from the unsaturated dicarboxylic anhydride monomer by using ammonia or primary amine.
The aromatic vinyl monomer used in the maleimide based copolymer is for improving the color phase of the resin composition. For example, styrene, o-methyl styrene, m-methyl styrene, p-methyl styrene, 2,4-dimethyl styrene, ethyl styrene, p-tert-butyl styrene, $\alpha$-methyl styrene, $\alpha$-methyl-p-methyl styrene and the like can be mentioned. Among these, styrene is preferable since the effect of improving color phase is high. These aromatic vinyl monomers can be used alone, or two or more of these can be used in combination.

The amount of the aromatic vinyl monomer unit contained in the maleimide based copolymer is 40 to 55 mass%, preferably 45 to 55 mass%. The amount is, particularly for example, 40, 45, 46, 47, 48, 49, 50, 51, 52, 53, 54, 55mass%, and can be in the range between the two values exemplified herein. When the amount of the aromatic vinyl monomer unit is less than 40 mass%, the color phase of the resin composition can get yellowish, and when the amount exceeds 60 mass%, the heat resistance of the resin composition can degrade.

The vinyl cyanide monomer used in the maleimide based copolymer is for improving the chemical resistance of the resin composition. For example, acrylonitrile, methacrylonitrile, ethacrylonitrile, and fumaronitrile can be mentioned. Among these, acrylonitrile is preferable since the effect of improving chemical resistance is high. These vinyl cyanide monomers can be used alone, or two or more of these can be used in combination.

The vinyl cyanide monomer unit contained in the maleimide based copolymer is 7 to 20 mass%, preferably 7 to 15 mass%. The amount is, particularly for example, 7, 8, 9, 10, 11, 12, 13, 14, 15, or 20 mass%, and can be in the range between the two values exemplified herein. When the amount of the vinyl cyanide monomer unit is less than 5 mass%, the effect of improving chemical resistance of the resin composition cannot be achieved, and when the amount exceeds 20 mass%, the color phase of the resin composition can get yellowish.

The maleimide monomer which can be used in the maleimide based copolymer is for improving the heat resistance of the resin composition. For example, N-alkyl maleimide such as N-methyl maleimide, N-butyl maleimide, and N-cyclohexyl maleimide; and N-phenyl maleimide, N-chlorophenyl maleimide, N-methylphenyl maleimide, N-methoxyphenyl maleimide, and N-tribromophenyl maleimide can be mentioned. Among these, N-phenyl maleimide is preferable since the effect of improving heat resistance is high. These maleimide monomers can be used alone, or two or more of these can be used in combination.

The maleimide monomer unit contained in the maleimide based copolymer is 25 to 50 mass%, preferably 37 to 45 mass%. The amount is, particularly for example, 25, 30, 35, 36, 37, 38, 39, 40, 41, 42, 43, 44, 45, 46, 47, 48, 49, or 50 mass%, and can be in the range between the two values exemplified herein. When the amount of the maleimide monomer unit is less than 25 mass%, the effect of improving heat resistance of the resin composition cannot be achieved, and when the amount exceeds 50 mass%, the impact strength of the resin composition can degrade.

The unsaturated dicarboxylic anhydride monomer used in the maleimide based copolymer is for improving the compatibility of the maleimide based copolymer and the ABS resin and the like. For example, maleic anhydride, itaconic anhydride, citraconic acid anhydride, and aconitic anhydride can be mentioned. Among these, maleic anhydride is preferable in terms of compatibility with ABS resin and the like. These unsaturated dicarboxylic anhydride monomers can be used alone, or two or more of these can be used in combination.

The dicarboxylic anhydride monomer unit contained in the maleimide based copolymer is 0.1 to 10 mass%, preferably 0.1 to 5 mass%, and further preferably 0.1 to 2 mass%. The amount is, particularly for example, 0.1, 0.2, 0.3, 0.4, 0.5, 0.6, 0.7, 0.8, 0.9, 1, 1.1, 1.2, 1.3, 1.4, 1.5, 2, 3, 4, 5, 6, 7, 8, 9, or 10 mass%, and can be in the range between the two values exemplified herein. When the amount of the dicarboxylic anhydride monomer unit is less than 0.1 mass%, the effect of improving compatibility with ABS resin and the like cannot be achieved, and when the amount exceeds 10 mass%, the thermal stability of the resin composition can degrade.

The content rate of the aromatic vinyl monomer unit, vinyl cyanide monomer unit, maleimide monomer unit, and dicarboxylic anhydride monomer unit contained in the maleimide based copolymer is a value obtained by the following measurement conditions using $^{13}$C-NMR method.

Name of Instrument : FT-NMR AVANCE 300 (available from Bruker Corporation)
Solvent : deuterated chloroform
Concentration : 14 mass%
Temperature : 25 °C
Cumulative Number : 10000 times

The weight average molecular weight of the maleimide based copolymer is 50,000 to 150,000. The weight average molecular weight is, particularly for example, 50,000, 60,000, 70,000, 80,000, 90,000, 100,000, 110,000, 120,000, 130,000, 140,000, or 150,000, and can be in the range between the two values exemplified herein. When the weight average molecular weight is in the range of 50,000 to 300,000, the difference in the melt viscosity with the acrylonitrile-butadiene-styrene copolymer resin, acrylonitrile-styrene-acryl based rubber copolymer resin, acrylonitrile-ethylene-propylene based rubber-styrene copolymer resin, or styrene-acrylonitrile copolymer resin described later would be small, and thus dispersibility with these resins would be superior.

The average number of dicarboxylic anhydride monomer unit contained in one molecule of the maleimide based copolymer is 1 to 20 unit, and preferably 4 to 15 unit. The average number is, particularly for example, 1, 5, 6, 7, 8, 9, 10, 11, 12, 13, 14, 15, 20 unit, and can be in the range between the two values exemplified herein. When the average number of dicarboxylic anhydride monomer unit is less than 1 unit, the effect of serving as a compatibilizer which is achieved by a reaction of the dicarboxylic anhydride monomer unit with other resin having terminal amino group or alcohol group can degrade. When the average number exceeds 30 unit, a cross-linked body can be generated by a reaction with metal salts derived from emulstion polymerization or amines used as additives.

In order to increase the average number of dicarboxylic anhydride monomer unit contained in one molecule of the maleimide based copolymer, the weight average molecular weight can be increased, or the amount of dicarboxylic anhydride monomer unit contained in the maleimide based copolymer can be increased.

The average number of dicarboxylic anhydride monomer unit contained in one molecule of the maleimide based copolymer is a value obtained by the following measurement method.

(1. Measurement of Weight Average Molecular Weight)

First, the weight average molecular weight of the maleimide based copolymer is measured by the following measurement conditions using GPC method.

Name of Instrument: SYSTEM-21 Shodex (available from Showa Denko K.K.)
Column: PL gel MIXED-B, 3 columns connected in series
Temperature: 40°C
Detection: differential refractive index
Eluent: tetrahydrofuran
Concentration: 0.8 mass%
Callibration Curve: standard polystyrene (PS) (available from Polymer Laboratories Ltd) was used for preparation

(2. Amount of Dicarboxylic Anhydride Monomer Unit)

Subsequently, content rate of the dicarboxylic anhydride monomer unit contained in the maleimide based copolymer is obtained by colorimetric titration method (indicator: phenolphthalein), using methyl ethyl ketone solution of the maleimide based copolymer. Titration is performed with 0.1N ethanolic potassium hydroxide solution.

Definition made as follows:

A: mass of maleimide based copolymer (g)
B: blank value of the volume of titrated ethanolic potassium hydroxide solution (mL)
C: volume of titrated ethanolic potassium hydroxide solution (mL)
D: molar mass of dicarboxylic anhydride monomer unit

The content rate (mass%) of the dicarboxylic anhydride monomer unit contained in the maleimide based copolymer can be obtained by the equation below.

$$(C-B) \times D/A/100 \qquad (1)$$

(3. Average Number of Dicarboxylic Anhydride Monomer Unit Contained in One Molecule)

From the weight average molecular weight (E) and the content rate (F) of dicarboxylic anhydride monomer unit contained in the maleimide based copolymer, the average number of the dicarboxylic anhydride monomer unit contained in one molecule of the maleimide based copolymer can be obtained by the equation (2) below.

$$E \times F/D/100 \qquad (2)$$

The maleimide based copolymer of the present invention can be obtained by first copoymerizing the aromatic vinyl monomer, vinyl cyanide monomer, and unsaturated dicarboxylic anhydride monomer, and then imidizing the dicarboxylic anhydride monomer unit in the copolymer into maleimide monomer unit (post imidizing method) by using ammonia or primary amine.

As the primary amine, for example, alkyl amine such as methyl amine, ethyl amine, n-propyl amine, iso-propyl amine, n-butyl amine, n-pentyl amine, n-hexyl amine, n-octyl amine, cyclohexyl amine, decyl amine; chlorinated or brominated alkyl amine; aromatic amine such as aniline, toluidine, naphthylamine; and the like can be mentioned. Among these, aniline and cyclohexyl amine are preferable. These primary amines can be used alone, or two or more of these can be used in combination. The addition amount of the primary amine is not particularly limited. Here, the addition amount with respect to the dicarboxylic anhydride monomer unit is preferably 0.7 to 1.1 molar equivalent, more preferably 0.85 to 1.05 molar equivalent. When the addition amount with respect to the dicarboxylic anhydride monomer unit in the maleimide based copolymer is 0.7 molar equivalent or more, it is preferable since the thermal stability of the resin composition obtained is excellent. In addition, when the addition amount is 1.1 molar equivalent or less, it is preferable since the amount of residual primary amine in the maleimide based copolymer becomes less.

When obtaining the maleimide based copolymer, in the reaction of ammonia or primary amine with the dicarboxylic anhydride monomer unit, especially in the reaction to convert the dicarboxylic anhydride monomer unit into the maleimide monomer unit, catalyst can be used as necessary in order to promote the dehydration/ring-closing reaction. There is no particular limitation regarding the kind of the catalyst. Here, for example, tertiary amine can be used. As the tertiary amine, for example, trimethylamine, triethylamine, tripropylamine, tributylamine, N,N-dimethylaniline, N,N-diethylaniline and the like can be mentioned. The addition amount of the tertiary amine is not particularly limited. Here, the addition amount is preferably 0.01 molar equivalent or more with respect to the dicarboxylic anhydride monomer unit. The temperature for the imidizing reaction of the present invention is preferably 100 to 250 °C, more preferably 120 to 200 °C. When the temperature for the imidizing reaction is 100 °C or higher, the reaction rate is sufficiently fast. Therefore, it is preferable in view of productivity. When the temperature for the imidizing reaction is lower than 250 °C, it is preferable since the deterioration of the physical property due to thermal degradation of the maleimide based copolymer can be suppressed.

When obtaining the maleimide based copolymer, polymerization can be carried out by charging the entire amount of the aromatic vinyl monomer, vinyl cyanide monomer, and the unsaturated dicarboxylic anhydride monomer in the earlier stage of polymerization. However, since the aromatic vinyl monomer and the unsaturated dicarboxylic anhydride monomer have strong tendency for alternate copolymerization, the aromatic vinyl monomer and the unsaturated dicarboxylic anhydride monomer would be consumed at the initial stage of polymerization, and then copolymer containing large amount of vinyl cyanide monomer unit would be generated in the latter stage of polymerization. As a result, the color phase of the maleimide based copolymer obtained would deteriorate. Further, the composition distribution of the maleimide based copolymer obtained would be large, thereby losing compatibility with the ABS resin and the like when kneaded and mixed. This would result in undesirable physical property of the resin composition. Therefore, in order to obtain a maleimide based copolymer having superior color phase and small (uniform) composition distribution, it is preferable to adopt a manufacturing method including the following steps.

Initial Polymerization Step : Entire amount of the vinyl cyanide monomer to be charged, 10 to 90 mass% of the aromatic vinyl monomer to be charged, and 0 to 30 mass% of the unsaturated dicarboxylic anhydride monomer to be charged are mixed, and then copolymerization is initiated by charging the mixture at the initial stage of polymerization.

Middle Polymerization Step : The residual amount of the aromatic vinyl monomer to be charged and the residual amount of the unsaturated dicarboxylic anhydride monomer to be charged are each added by portions or continuously while continuing copolymerization.

Final Polymerization Step : After charging the entire amount of the unsaturated dicarboxylic anhydride monomer, aromatic vinyl monomer is added by the amount of 1/10 or more of the amount to be added by portions or continuously, and polymerized.

Imidizing Step : The copolymer thus obtained is imidized with ammonia or with primary amine to obtain the maleimide based copolymer.

As the method for removing volatile component (devolatilization method) from the solution such as solvent or unreacted monomer used in the solution polymerization after the imidizing step of the maleimide based copolymer, known method can be adopted. For example, a vacuum devolatilization tank equipped with a heater and a devolatilization extruder equipped with a vent can be used. The molten maleimide based copolymer after the devolatilization is transferred to the pelletizing step. The molten copolymer is extruded into strands from a porous die, and processed into pellets by cold cut method, air-cooled hot cutting method or underwater hot cutting method.

The maleimide based copolymer, in terms of effectively improving heat resistance of a resin such as ABS resin and ASA resin which are to be kneaded and mixed with, preferably has a glass transition temperature of 165 to 200 °C, more preferably 170 to 200 °C, and further preferably 175 to 185 °C. The glass transition temperature is, particularly for example, 165, 170, 175, 176, 177, 178, 179, 180, 185, 190, 195, or 200 °C, and can be in the range between the two values exemplified herein. The glass transition temperature is a glass transition midpoint temperature (Tmg) of the maleimide based copolymer measured in accordance with JIS K-7121 by the following instrument and measurement conditions.

Name of Instrument : Differential Scanning Calorimeter, Robot DSC 6200 (available from Seiko Instruments Inc.)
Temperature Elevation Rate: 10 °C/min

In order to raise the glass transition temperature of the maleimide based copolymer, content of the maleimide monomer unit can be increased, or a monomer having high glass transition temperature can be copolymerized.

The maleimide based copolymer can have a copolymerizable monomer other than the aromatic vinyl monomer, vinyl cyanide monomer, and unsaturated dicarboxylic anhydride monomer copolymerized within an extent which does not impair the effect of the present invention. As the monomer which can be copolymerized with the maleimide based copolymer, maleimide monomer such as N-alkyl maleimides such as N-methylmaleimide, N-butylmaleimide, and N-cyclohexylmaleimide, and N-phenylmaleimide, N-chlorophenylmaleimide, N-methylphenylmaleimide, N-methoxyphenylmaleimide, N-tribromophenylmaleimide; acrylic acid ester monomer such as methyl acrylate, ethyl acrylate and butyl acrylate; methacrylic acid ester monomer such as methyl methacrylate and ethyl methacrylate; vinyl carboxylic acid monomer such as acrylic acid and methacrylic acid; acrylamide and methacrylamide can be mentioned for example. These monomers which can be copolymerized with the maleimide based copolymer can be used alone, or two or more of these can be used in combination.

The polymerization method of the maleimide based copolymer includes, for example, solution polymerization and bulk polymerization. Solution polymerization is preferable from the viewpoint that a maleimide based copolymer with a uniform copolymerization composition can be obtained by polymerizing while adding the monomer to be copolymerized by portions or continuously. The solvent for solution polymerization is preferably non-polymerizable from the viewpoint that formation of byproduct and adverse effect can be suppressed. For example, ketone such as acetone, methyl ethyl ketone, methyl isobutyl ketone, acetophenone and the like; ether such as tetrahydrofuran, 1,4-dioxiane and the like; aromatic hydrocarbon such as benzene, toluene, xylene, chlorobenzene and the like; N,N-dimethylformamide; dimethyl sulfoxide; N-methyl-2-pyrrolidone and the like can be mentioned. In terms of easily removing the solvent during devolatilization and recovery of the maleimide based copolymer, methyl ethyl ketone and methyl isobutyl ketone are preferable. Polymerization process of any one of continuous polymerization process, batch process (batch), and semi-batch process can be applied.

The polymerization method of the maleimide based copolymer is not particularly limited. Here, the maleimide based copolymer can be obtained preferably by radical polymerization, and the polymerization temperature is preferably in the range of 80 to 150 °C. Polymerization initiator is not particularly limited. For example, known azo compound such as azobisisobutyronitrile, azobiscyclohexanecarbonitrile, azobismethylpropionitrile, azobismethylbutyronitrile and the like; and known organic peroxide such as benzoyl peroxide, t-butyl peroxybenzoate, 1,1-bis(t-butyl peroxy)-3,3,5-trimethylcyclohexane, t-butyl peroxy isopropyl monocarbonate, t-butyl peroxy-2-ethylhexanoate, di-t-butyl peroxide, dicumylperoxide, ethyl-3,3-di-(t-butylperoxy)butyrate and the like can be used. These polymerization initiators can be used alone, or two or more of these can be used in combination. From the viewpoint of the polymerization reaction rate and control of the polymerization ratio, azo compounds and organic peroxides having a 10 hour half-life of 70 to 120°C are preferable. The amount of the polymerization initiator used is not particularly limited. Here, the amount is preferably 0.1 to 1.5 parts by mass with respect to 100 parts by mass of the total monomer being used in the polymerization, more preferably 0.1 to 1.0 parts by mass. When the amount of the polymerization initiator used is 0.1 parts by mass or more, it is preferable since sufficient polymerization reaction rate can be achieved. When the amount of the polymerization initiator used is 1.5 parts by mass or less, the polymerization reaction rate can be suppressed, thereby allowing easy control of the reaction. Accordingly, the target molecular weight can be obtained easily.

In the manufacture of the maleimide based copolymer, chain transfer agent can be used. The chain transfer agent used is not particularly limited. For example, n-octyl mercaptan, n-dodecyl mercaptan, t-dodecyl mercaptan, α-methyl styrene dimer, ethyl thioglycolate, limonene, terpinolene and the like can be mentioned. The amount of the chain transfer agent used is not particularly limited, so long as it is in the range which allows to obtain the target molecular weight. Here, the amount of the chain transfer agent used is preferably 0.01 to 0.8 parts by mass with respect to 100 parts by mass of the total monomer being used in the polymerization, more preferably 0.1 to 0.5 parts by mass. When the amount of the chain transfer agent used is 0.01 to 0.8 parts by mass, the target molecular weight can be obtained easily.

By mixing and kneading with various resins, the maleimide based copolymer thus obtained can be used as a heat resistance providing agent of the obtained resin composition. As such various resins, although not particularly limited, ABS resin, ASA resin, AES resin, and SAN resin can be mentioned. Since the maleimide based copolymer and these resins have superior compatibility, high heat resistance providing effect can be achieved. The formulation ratio of the maleimide based copolymer with these resins is preferably 5 to 40 mass% of the maleimide based copolymer and 60 to 95 mass% of the one or two or more of the resin selected from the group consisting of ABS resin, ASA resin, AES resin, and SAN resin. More preferably, the formulation ratio is 10 to 30 mass% of the maleimide based copolymer and 70 to 90 mass% of the one or two or more of the resin selected from the group consisting of ABS resin, ASA resin, AES resin, and SAN resin.

When the formulation ratio of the maleimide based copolymer is in such range, the effect of improving heat resistance of the resin composition can be obtained, and the chemical resistance and the color phase of the resin composition do not deteriorate.

The method for mixing and kneading the maleimide based copolymer with the various resins is not particularly limited. Here, known melting and kneading techniques can be used. As the melting and kneading machine which can be suitably used, screw extruder such as single screw extruder, fully intermeshing co-rotating twin-screw extruder, fully intermeshing counter-rotating twin-screw extruder, non-intermeshing or partially intermeshing twin-screw extruder; banbury mixer; co-kneader; mixing roll and the like can be mentioned.

When mixing and kneading the maleimide based copolymer with these resins, stabilizer, UV absorber, flame retardant, plasticizer, lubricant, glass fiber, inorganic filler, coloring agent, antistatic agent, and the like can be further added.

As the method for obtaining a molded body from the resin composition, known molding techniques can be used. For example, injection molding, extrusion molding, sheet molding, and press molding can be mentioned. The resin composition of the present invention is superior especially in heat resistance, and thus can be suitably used as a material for injection molding in which the material is subjected to high temperature and high pressure conditions during the molding.

The molded body obtained by molding the resin composition can be suitably used for interior components and exterior components of automobiles.

**EXAMPLE**

Hereinafter, detailed explanation is provided with reference to Examples. However, the present invention is not limited to the following Examples.

<Production Example of Maleimide Based Copolymer (A-1), Comparative Example>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.025 parts by mass of $\alpha$-methyl styrene dimer, and 12 parts by mass of methyl isobutyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 50 parts by mass of methyl isobutyl ketone and 28 parts by mass of styrene were added continuously over 4.5 hours. Further, after completion of the addition of maleic anhydride, 14 parts by mass of styrene was added continuously over 0.5 hour. After adding styrene, the temperature of the reaction mixture was raised to 120 °C, and the reaction was carried out for 0.5 hour to complete polymerization. Thereafter, 26.6 parts by mass of aniline and 0.5 parts by mass of triethylamine were added to the polymerization solution, and reaction was carried out at 140 °C for 6 hours. The imidizing reaction solution after completion of reaction was fed to a vent type screw extruder, and the volatile component was removed to obtain pellet maleimide based copolymer A-1. Results of analysis for the maleimide based copolymer A-1 are shown in Table 1.

<Production Example of Maleimide Based Copolymer (A-2)>

To an autoclave having a capacity of about 120 liters equipped with an agitator, 20 parts by mass of styrene, 11 parts by mass of acrylonitrile, 5 parts by mass of maleic anhydride, 0.1 parts by mass of t-butylperoxy-2-ethylhexanoate, 0.025 parts by mass of $\alpha$-methyl styrene dimer, and 12 parts by mass of methyl isobutyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 27 parts by mass of maleic anhydride and 0.22 parts by mass of t-butylperoxy-2-ethylhexanoate in 50 parts by mass of methyl isobutyl ketone and 28 parts by mass of styrene were added continuously over 4.5 hours. Further, after completion of the addition of maleic anhydride, 9 parts by mass of styrene was added continuously over 0.5 hour. After adding styrene, the temperature of the reaction mixture was raised to 120 °C, and the reaction was carried out for 0.5 hour to complete polymerization. Thereafter, 30.0 parts by mass of aniline and 0.5 parts by mass of triethylamine were added to the polymerization solution, and reaction was carried out at 140 °C for 6 hours. The imidizing reaction solution after completion of reaction was fed to a vent type screw extruder, and the volatile component was removed to obtain pellet maleimide based copolymer A-2. Results of analysis for the maleimide based copolymer A-2 are shown in Table 1.

<Production Example of Maleimide Based Copolymer (A-3)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.025 parts by mass of $\alpha$-methyl styrene dimer, and 12 parts by mass of methyl isobutyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 50 parts by mass of methyl isobutyl ketone and 28 parts by mass of styrene were added continuously over 4.5 hours. Further, after completion of the addition of maleic anhydride, 14 parts by mass of styrene was added continuously over 0.5 hour. After adding styrene, the temperature of the reaction mixture was raised to 120 °C, and the reaction was carried out for 0.5 hour to complete polymerization. Thereafter, 26.6 parts by mass of aniline and 0.5 parts by mass of triethylamine were added to the polymerization solution, and reaction was carried out at 140 °C for 8 hours. The imidizing reaction solution after completion of reaction was fed to a vent type screw extruder, and the volatile component was removed to obtain pellet maleimide based copolymer A-3. Results of analysis for the maleimide based copolymer A-3 are shown in Table 1.

<Production Example of Maleimide Based Copolymer (A-4)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.4 parts by mass of α-methyl styrene dimer, and 12 parts by mass of methyl isobutyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 50 parts by mass of methyl isobutyl ketone and 28 parts by mass of styrene were added continuously over 4.5 hours. Further, after completion of the addition of maleic anhydride, 14 parts by mass of styrene was added continuously over 0.5 hour. After adding styrene, the temperature of the reaction mixture was raised to 120 °C, and the reaction was carried out for 0.5 hour to complete polymerization. Thereafter, 26.6 parts by mass of aniline and 0.5 parts by mass of triethylamine were added to the polymerization solution, and reaction was carried out at 140 °C for 6 hours. The imidizing reaction solution after completion of reaction was fed to a vent type screw extruder, and the volatile component was removed to obtain pellet maleimide based copolymer A-4. Results of analysis for the maleimide based copolymer A-4 are shown in Table 1.

<Production Example of Maleimide Based Copolymer (A-5)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.6 parts by mass of α-methyl styrene dimer, and 12 parts by mass of methyl isobutyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 50 parts by mass of methyl isobutyl ketone and 28 parts by mass of styrene were added continuously over 4.5 hours. Further, after completion of the addition of maleic anhydride, 14 parts by mass of styrene was added continuously over 0.5 hour. After adding styrene, the temperature of the reaction mixture was raised to 120 °C, and the reaction was carried out for 0.5 hour to complete polymerization. Thereafter, 26.6 parts by mass of aniline and 0.5 parts by mass of triethylamine were added to the polymerization solution, and reaction was carried out at 140 °C for 7.5 hours. The imidizing reaction solution after completion of reaction was fed to a vent type screw extruder, and the volatile component was removed to obtain pellet maleimide based copolymer A-5. Results of analysis for the maleimide based copolymer A-5 are shown in Table 1.

<Production Example of Maleimide Based Copolymer (A-6, Comparative Example)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, and 12 parts by mass of methyl isobutyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 50 parts by mass of methyl isobutyl ketone and 28 parts by mass of styrene were added continuously over 4.5 hours. Further, after completion of the addition of maleic anhydride, 14 parts by mass of styrene was added continuously over 0.5 hour. After adding styrene, the temperature of the reaction mixture was raised to 120 °C, and the reaction was carried out for 0.5 hour to complete polymerization. Thereafter, 26.6 parts by mass of aniline and 0.5 parts by mass of triethylamine were added to the polymerization solution, and reaction was carried out at 140 °C for 6 hours. The imidizing reaction solution after completion of reaction was fed to a vent type screw extruder, and the volatile component was removed to obtain pellet maleimide based copolymer A-6. Results of analysis for the maleimide based copolymer A-6 are shown in Table 1.

<Production Example of Maleimide Based Copolymer (A-7, Comparative Example)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.05 parts by mass of α-methyl styrene dimer, and 12 parts by mass of methyl isobutyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 50 parts by mass of methyl isobutyl ketone and 28 parts by mass of styrene were added continuously over 4.5 hours. Further, after completion of the addition of maleic anhydride, 14 parts by mass of styrene was added continuously over 0.5 hour. After adding styrene, the temperature of the reaction mixture was raised to 120 °C, and the reaction was carried out for 0.5 hour to complete polymerization. Thereafter, 26.6 parts by mass of aniline and 0.5 parts by mass of triethylamine were added to the polymerization solution, and reaction was carried out at 140 °C for 5.5 hours. The imidizing reaction solution after completion of reaction was fed to a vent type screw extruder, and the volatile component was removed to obtain pellet maleimide based copolymer A-7. Results of analysis for the maleimide based copolymer A-7 are shown in Table 1.

<Production Example of Maleimide Based Copolymer (B-1)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.025 parts by mass of α-methyl styrene dimer, and 12 parts by mass of methyl isobutyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 50 parts by mass of methyl isobutyl ketone and 28 parts by mass of styrene were added continuously over 4.5 hours. Further, after completion of the addition of maleic anhydride, 14 parts by mass of styrene was added continuously over 0.5 hour. After adding styrene, the temperature of the reaction mixture was raised to 120 °C, and the reaction was carried out for 0.5 hour to complete polymerization. Thereafter, 26 parts by mass of aniline and 0.5 parts by mass of triethylamine were added to the polymerization solution, and reaction was carried out at 140 °C for 5 hours. The imidizing reaction solution after completion of reaction was fed to a vent type screw extruder, and the volatile component was removed to obtain pellet maleimide based copolymer B-1. Results of analysis for the maleimide based copolymer B-1 are shown in Table 2.

<Production Example of Maleimide Based Copolymer (B-2)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, and 12 parts by mass of methyl isobutyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 50 parts by mass of methyl isobutyl ketone and 28 parts by mass of styrene were added continuously over 4.5 hours. Further, after completion of the addition of maleic anhydride, 14 parts by mass of styrene was added continuously over 0.5 hour. After adding styrene, the temperature of the reaction mixture was raised to 120 °C, and the reaction was carried out for 0.5 hour to complete polymerization. Thereafter, 17.8 parts by mass of aniline and 0.5 parts by mass of triethylamine were added to the polymerization solution, and reaction was carried out at 140 °C for 5 hours. The imidizing reaction solution after completion of reaction was fed to a vent type screw extruder, and the volatile component was removed to obtain pellet maleimide based copolymer B-2. Results of analysis for the maleimide based copolymer B-2 are shown in Table 2.

<Production Example of Maleimide Based Copolymer (B-3)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.025 parts by mass of α-methyl styrene dimer, and 12 parts by mass of methyl isobutyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 50 parts by mass of methyl isobutyl ketone and 28 parts by mass of styrene were added continuously over 4.5 hours. Further, after completion of the addition of maleic anhydride, 14 parts by mass of styrene was added continuously over 0.5 hour. After adding styrene, the temperature of the reaction mixture was raised to 120 °C, and the reaction was carried out for 0.5 hour to complete polymerization. Thereafter, 19 parts by mass of aniline and 0.5 parts by mass of triethylamine were added to the polymerization solution, and reaction was carried out at 140 °C for 6 hours. The imidizing reaction solution after completion of reaction was fed to a vent type screw extruder, and the volatile component was removed to obtain pellet maleimide based copolymer B-3. Results of analysis for the maleimide based copolymer B-3 are shown in Table 2.

<Production Example of Maleimide Based Copolymer (B-4)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.025 parts by mass of α-methyl styrene dimer, and 12 parts by mass of methyl isobutyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 23 parts by mass of maleic anhydride and 0.22 parts by mass of t-butylperoxy-2-ethylhexanoate in 50 parts by mass of methyl isobutyl ketone and 28 parts by mass of styrene were added continuously over 4.5 hours. Further, after completion of the addition of maleic anhydride, 14 parts by mass of styrene was added continuously over 0.5 hour. After adding styrene, the temperature of the reaction mixture was raised to 120 °C, and the reaction was carried out for 0.5 hour to complete polymerization. Thereafter, 17.8 parts by mass of aniline and 0.5 parts by mass of triethylamine were added to the polymerization solution, and reaction was carried out at 140 °C for 5 hours. The imidizing reaction solution after completion of reaction was fed to a vent type screw extruder, and the volatile component was removed to obtain pellet maleimide based copolymer B-4. Results of analysis for the maleimide based copolymer B-4 are shown in Table 2.

[Table 1]

| Table 1 | | | A-1 | A-2 | A-3 | A-4 | A-5 | A-6 | A-7 |
|---|---|---|---|---|---|---|---|---|---|
| constitution unit | aromatic vinyl monomer unit | mass% | 50.6 | 45.6 | 49.2 | 50.8 | 49.5 | 50.8 | 50.1 |
| | vinyl cyanide monomer unit | mass% | 8.0 | 8.2 | 8.0 | 8.0 | 8.0 | 8.1 | 8.1 |
| | unsaturated dicarboxylic anhydride monomer unit | mass% | 1.4 | 1.1 | 0.5 | 1.4 | 0.6 | 1.4 | 2.0 |
| | maleimide monomer unit | mass% | 39.9 | 45.1 | 42.3 | 39.7 | 41.9 | 39.7 | 39.9 |
| weight average molecular weight (x10$^4$) | | Mw | 14.1 | 12.9 | 14.5 | 8.4 | 7.9 | 16.8 | 13.6 |
| glass transition temperature | | ° C | 177 | 185 | 179 | 176 | 178 | 176 | 178 |
| unsaturated dicarboxylic anhydride monomer unit per one molecule of polymer | | unit | 20.8 | 14.0 | 7.2 | 12.3 | 4.9 | 24.6 | 27.3 |

Examples A-1 and A-6 and A-7 are Comparative Examples

[Table 2]

| Table 2 | | | B-1 | B-2 | B-3 | B-4 |
|---|---|---|---|---|---|---|
| constitution unit | aromatic vinyl monomer unit | mass% | 51.0 | 50.4 | 52.0 | 52.3 |
| | vinyl cyanide monomer unit | mass% | 8.1 | 8.0 | 17.0 | 17.3 |
| | unsaturated dicarboxylic anhydride monomer unit | mass% | 2.4 | 2.2 | 1.5 | 2.2 |
| | maleimide monomer unit | mass% | 38.5 | 39.3 | 29.6 | 28.2 |
| weight average molecular weight (x10$^4$) | | Mw | 13.9 | 17.0 | 14.1 | 15.0 |

(continued)

| Table 2 | | B-1 | B-2 | B-3 | B-4 |
|---|---|---|---|---|---|
| glass transition temperature | ° C | 176 | 177 | 154 | 153 |
| unsaturated dicarboxylic anhydride monomer unit per one molecule of polymer | unit | 34.4 | 38.2 | 21.0 | 33.4 |

(Weight Average Molecular Weight)

The weight average molecular weight of the maleimide based copolymer was measured by the following measurement conditions using GPC method.

Name of Instrument: SYSTEM-21 Shodex (available from Showa Denko K.K.)
Column: PL gel MIXED-B, 3 columns connected in series
Temperature: 40°C
Detection: differential refractive index
Eluent: tetrahydrofuran
Concentration: 0.8 mass%
Callibration Curve: standard polystyrene (PS) (available from Polymer Laboratories Ltd) was used for preparation

(Glass Transition Temperature)

The glass transition midpoint temperature (Tmg) of the maleimide based copolymer was measured in accordance with JIS K-7121 by the following instrument and measurement conditions.

Name of Instrument : Robot DSC 6200 (available from Seiko Instruments Inc.)
Temperature Elevation Rate: 10 °C/min

(Dicarboxylic Anhydride Monomer Unit Contained in one Polymer Molecule)

First, content rate of the dicarboxylic anhydride monomer unit contained in the maleimide based copolymer was measured by the following procedure.
Content rate of the dicarboxylic anhydride monomer unit contained in the maleimide based copolymer was obtained by colorimetric titration method (indicator: phenolphthalein), using methyl ethyl ketone solution of the maleimide based copolymer. Titration was performed with 0.1N ethanolic potassium hydroxide solution.
Definition was made as follows:

A: mass of maleimide based copolymer (g)
B: blank value of the volume of titrated ethanolic potassium hydroxide solution (mL)
C: volume of titrated ethanolic potassium hydroxide solution (mL)
D: molar mass of dicarboxylic anhydride monomer unit

The content rate (mass%) of the dicarboxylic anhydride monomer unit contained in the maleimide based copolymer was obtained by the equation below.

```
content rate (F) of dicarboxylic anhydride monomer unit = (C-
B) x D/A/100
```

Next, from the weight average molecular weight (E) obtained above, the average number of the dicarboxylic anhydride monomer unit contained in one molecule of the maleimide based copolymer was obtained by the equation below.

average number of the dicarboxylic anhydride monomer unit contained in one molecule of the maleimide based copolymer = E x F/D/100

<Examples and Comparative Examples>

Examples 1 to 7, Comparative Examples 1 to 4 (Mixing and Kneading of Maleimide Based Copolymer and ABS Resin)

The maleimide based copolymers A-1 to A-7, and B-1 to B-4, and commercially available ABS resin "GR-3000" (available from Denka Company Limited) were blended by the formulation ratio shown in Table 3 and Table 4. Subsequently, twin screw extruder (TEM-35B, available from Toshiba Machine Co.) was used to extrude the material to obtain pellets. These pellets were used to prepare test pieces using an injection molding machine. Various properties were measured with the test pieces. The results are shown in Table 3 and Table 4.

[Table 3]

| Table 3 | | | | Example | | | | | | |
|---|---|---|---|---|---|---|---|---|---|---|
| | | | | 1 | 2 | 3 | 4 | 5 | 6 | 7 |
| maleimide based copolymer used | | | – | A-1 | A-2 | A-3 | A-4 | A-5 | A-6 | A-7 |
| evaluation of property | formulation amount | GR-3000 | mass% | 80 | 80 | 80 | 80 | 80 | 80 | 80 |
| | | maleimide based copolymer | mass% | 20 | 20 | 20 | 20 | 20 | 20 | 20 |
| | Charpy Impact Strength | with notch kJ/m$^2$ | | 7.1 | 8.9 | 7.3 | 9.8 | 7.1 | 8.2 | 8.2 |
| | Vicat Softening Temperature | 50N | | 113 | 115 | 114 | 113 | 114 | 113 | 114 |
| | MFR | 220° C、98N | | 10.2 | 12.0 | 10.0 | 12.6 | 12.6 | 10.1 | 10.3 |
| | glossiness | % | | 94.4 | 96.5 | 97.9 | 97.2 | 97.8 | 91.4 | 91.0 |

Examples A-1 and A-6 and A-7 are Comparative Examples

[Table 4]

| Table 4 | | | | Comparative Example | | | |
|---|---|---|---|---|---|---|---|
| | | | | 1 | 2 | 3 | 4 |
| maleimide based copolymer used | | | – | B-1 | B-2 | B-3 | B-4 |
| evaluation of property | formulation amount | GR-3000 | mass% | 80 | 80 | 80 | 80 |
| | | maleimide based copolymer | mass% | 20 | 20 | 20 | 20 |
| | Charpy Impact Strength | with notch kJ/m$^2$ | | 8.2 | 7.7 | 7.4 | 7.4 |
| | Vicat Softening Temperature | 50N | | 113 | 114 | 109 | 110 |
| | MFR | 220° C、98N | | 7.8 | 9.3 | 12.7 | 9.7 |
| | glossiness | % | | 89.0 | 86.9 | 93.0 | 88.9 |

(Charpy Impact Strength)

The Charpy impact strength was measured using a notched specimen in accordance with JIS K-7111. Edgewise was adopted as the striking direction, relative humidity was 50%, and atmospheric temperature was 23 °C. Here, digital impact tester available from Toyo Seiki Seisaku-sho, Ltd. was used as the measuring instrument.

(Vicat Softening Temperature)

The vicat softening temperature was measured in accordance with JIS K7206. Here, Method 50 (load: 50N, temperature raising speed 50 °C/hour) was used, and the test piece having the size of 10 mm x 10 mm and 4 mm thickness was used. HDT & VSPT testing device available from Toyo Seiki Seisaku-sho, Ltd. was used as the measuring instrument.

(Melt Mass Flow Rate; MFR)

Melt mass flow rate was measured at 220 °C with 98 N load in accordance with JIS K7210.

(Glossiness)

Glossiness was measured in accordance with JIS Z-8741 with a measurement angle of 60°. UGV-4D available from Suga Test Instruments Co., Ltd. was used as the measuring instrument.

The maleimide based copolymers A-1 to A-7 which satisfy the range of the present invention had sufficiently low number of dicarboxylic anhydride monomer unit contained in the copolymer, and had sufficiently high glass transition temperature. Accordingly, the resin compositions of Example 1 to Example 7 obtained by mixing and kneading these maleimide based copolymers with ABS resin had superior impact resistance, flowability, heat resistance, and surface glossiness. In addition, since the matrix resin of the ABS resin is AS resin, it can be expected that the maleimide based copolymer of the present invention can also achieve a similar effect with the AES resin and ASA resin which have AS resin as the matrix resin. On the other hand, the resin compositions of Comparative Example 1 to Comparative Example 4 obtained by mixing and kneading the maleimide based copolymers B-1 to B-4 which do not satisfy the range of the present invention showed inferior results in at least one of flowability, heat resistance, and surface glossiness.

INDUSTRIAL APPLICABILITY

The maleimide based copolymer of the present invention can provide a resin composition superior in the balance of heat resistance, impact resistance, flowability, and surface glossiness, by mixing and kneading the maleimide based copolymer with ABS resin, ASA resin, AES resin, and SAN resin. The resin composition obtained can be suitably used for interior components and exterior components of automobiles.

**Claims**

1. A maleimide based copolymer comprising 40 to 55 mass% of aromatic vinyl monomer unit, 7 to 20 mass% of vinyl cyanide monomer unit, 25 to 50 mass% of maleimide monomer unit, 0.1 to 10 mass% of dicarboxylic anhydride monomer unit; wherein the maleimide based copolymer has a glass transition temperature of 165 to 200°C measured in accordance with JIS K-7121 at a temperature elevation rate of 10 °C/min; an average number of the dicarboxylic anhydride monomer unit contained in one copolymer molecule is 1 to 20 units measured with colorimetric titration according to the method mentioned in the specification; and the weight average molecular weight of the maleimide based copolymer is 50,000 to 150, 000, wherein the weight average molecular weight is determined according to method mentioned in the specification.

2. A manufacturing method of the maleimide based copolymer of Claim 1, comprising the steps of:

   initial polymerizing step to start copolymerization by blending entire amount of vinyl cyanide monomer to be charged, 10 to 90 mass% of aromatic vinyl monomer to be charged, and 0 to 30 mass% of unsaturated dicarboxylic anhydride monomer to be charged;
   middle polymerization step to continue copolymerization while adding 50 to 90 mass% of residual amount of the aromatic vinyl monomer and entirety of residual amount of the unsaturated dicarboxylic anhydride monomer, each added by portions or continuously;
   final polymerization step to add entirety of residual amount of aromatic vinyl monomer to obtain a copolymer including the aromatic vinyl monomer unit, the vinyl cyanide monomer unit, and the dicarboxylic anhydride monomer unit; and
   imidizing step to imidize the dicarboxylic anhydride monomer unit of the copolymer obtained into the maleimide monomer unit by using ammonia or primary amine.

3. A resin composition comprising 5 to 40 mass% of the maleimide based copolymer of Claim 1 and 60 to 95 mass% of one or two or more of a resin selected from the group consisting of acrylonitrile-butadiene-styrene copolymer resin, acrylonitrile-styrene-acryl based rubber copolymer resin, acrylonitrile-ethylene-propylene based rubber-styrene copolymer resin, and styrene-acrylonitrile copolymer resin.

4. An injection molded body using the resin composition of Claim 3.

5. Use of the injection molded body of Claim 4 as an interior component or exterior component of an automobile.

**Patentansprüche**

1. Copolymer auf Maleinimid-Basis, umfassend 40 bis 55 Masse-% einer aromatischen Vinylmonomereinheit, 7 bis 20 Masse-% einer Vinylcyanidmonomereinheit, 25 bis 50 Masse-% einer Maleinimidmonomereinheit, 0.1 bis 10 Masse-% einer Dicarbonsäureanhydridmonomereinheit; wobei das Copolymer auf Maleinimidbasis eine Glasübergangstemperatur von 165 bis 200°C gemessen gemäß JIS K-7121 bei einer Temperaturerhöhungsrate von 10°C/min aufweist; eine durchschnittliche Anzahl der Dicarbonsäureanhydridmonomereinheit, die in einem Copolymermolekül enthalten ist, 1 bis 20 Einheiten beträgt, gemessen mit kolorimetrischer Titration gemäß dem in der Spezifikation erwähnten Verfahren; und das gewichtsmittlere Molekulargewicht des Copolymers auf Maleinimid-Basis 50.000 bis 150.000 beträgt, wobei das gewichtsmittlere Molekulargewicht gemäß dem in der Spezifikation erwähnten Verfahren bestimmt wird.

2. Verfahren zur Herstellung des Copolymers auf Maleinimid-Basis nach Anspruch 1, das die folgenden Schritte umfasst:

   anfänglicher Polymerisationsschritt zum Starten der Copolymerisation durch Mischen der gesamten Menge des zuzuführenden Vinylcyanidmonomers, 10 bis 90 Masse-% des zuzuführenden aromatischen Vinylmonomers und 0 bis 30 Masse-% des zuzuführenden ungesättigten Dicarbonsäureanhydridmonomers;
   mittlerer Polymerisationsschritt, um die Copolymerisation fortzusetzen, während 50 bis 90 Masse-% der Restmenge des aromatischen Vinylmonomers und die Gesamtheit der Restmenge des ungesättigten Dicarbonsäureanhydridmonomers, jeweils portionsweise oder kontinuierlich zugegeben werden;
   abschließender Polymerisationsschritt zum Zugeben der gesamten Restmenge des aromatischen Vinylmonomers, um ein Copolymer zu erhalten, das die aromatische Vinylmonomereinheit, die Vinylcyanidmonomereinheit und die Dicarbonsäureanhydridmonomereinheit enthält; und
   Imidisierungsschritt zum Imidisieren der Dicarbonsäureanhydridmonomereinheit des erhaltenen Copolymers in die Maleinimidmonomereinheit unter Verwendung von Ammoniak oder primärem Amin.

3. Harzzusammensetzung, umfassend 5 bis 40 Masse-% des Copolymers auf Maleinimid-Basis nach Anspruch 1 und 60 bis 95 Masse-% eines oder zweier oder mehrerer Harze, ausgewählt aus der Gruppe bestehend aus Acrylnitril-Butadien-Styrol-Copolymerharz, Kautschuk-Copolymerharz auf Acrylnitril-Styrol-Acryl-Basis, Kautschuk-Styrol-Copolymerharz auf Acrylnitril-Ethylen-Propylen-Basis und Styrol-Acrylnitril-Copolymerharz.

4. Spritzgegossener Körper unter Verwendung der Harzzusammensetzung nach Anspruch 3.

5. Verwendung des spritzgegossenen Körpers nach Anspruch 4 als Innen- oder Außenbauteil eines Automobils.

**Revendications**

1. Copolymère à base de maléimide comprenant 40 à 55 % en masse d'unité monomère de vinyle aromatique, 7 à 20 % en masse d'unité monomère de cyanure de vinyle, 25 à 50 % en masse d'unité monomère de maléimide, 0.1 à 10 % en masse d'unité monomère d'anhydride dicarboxylique ; dans lequel le copolymère à base de maléimide a une température de transition vitreuse de 165 à 200 °C mesurée conformément à la norme JIS K-7121 à une vitesse d'élévation de température de 10 °C/min ; le nombre moyen de l'unité monomère d'anhydride dicarboxylique contenues dans une molécule de copolymère est de 1 à 20 unités mesuré par titrage colorimétrique selon le procédé mentionné dans la spécification ; et le poids moléculaire moyen en poids du copolymère à base de maléimide est de 50 000 à 150 000, le poids moléculaire moyen en poids étant déterminé selon le procédé mentionné dans la spécification .

2. Procédé de fabrication du copolymère à base de maléimide de la revendication 1, comprenant les étapes suivantes :

   étape de polymérisation initiale pour démarrer la copolymérisation en mélangeant la totalité du monomère de cyanure de vinyle à charger, 10 à 90 % en masse de monomère de vinyle aromatique à charger, et 0 à 30 % en masse de monomère d'anhydride dicarboxylique insaturé à charger ;
étape de polymérisation intermédiaire pour poursuivre la copolymérisation tout en ajoutant 50 à 90 % en masse de la quantité résiduelle du monomère de vinyle aromatique et la totalité de la quantité résiduelle du monomère d'anhydride dicarboxylique insaturé, chacun étant ajouté par portions ou en continu ;
étape de polymérisation finale pour ajouter la totalité de la quantité résiduelle de monomère de vinyle aromatique afin d'obtenir un copolymère comprenant l'unité monomère de vinyle aromatique, l'unité monomère de cyanure de vinyle et l'unité monomère d'anhydride dicarboxylique ; et
étape d'imidification pour imider l'unité monomère d'anhydride dicarboxylique du copolymère obtenu dans l'unité monomère de maléimide en utilisant de l'ammoniaque ou de l'amine primaire.

3. Composition de résine comprenant 5 à 40 % en masse du copolymère à base de maléimide de la revendication 1 et 60 à 95 % en masse d'une ou deux ou plus d'une résine choisie dans le groupe constitué par la résine de copolymère acrylonitrile-butadiène-styrène, la résine de copolymère caoutchouc à base d'acrylonitrile-styrène-acryl, la résine de copolymère caoutchouc-styrène à base d'acrylonitrile-éthylène-propylène, et la résine de copolymère styrène-acrylonitrile.

4. Corps moulé par injection utilisant la composition de résine de la revendication 3.

5. Utilisation du corps moulé par injection de la revendication 4 comme composant intérieur ou composant extérieur d'une automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5798536 A
- JP S57125242 A
- JP 2004339280 A
- JP 2007009228 A
- JP H1160640 A
- KR 20050054382 A
- JP 2001329026 A
- JP H0657063 A
- JP H06248017 A
- US 2006241277 A1